# EUROPEAN PATENT SPECIFICATION

(11) **EP 1 982 897 B1**
(45) Date of publication and mention of the grant of the patent: **08.04.2015**
(21) Application number: 08154442.1
(22) Date of filing: 11.04.2008
(51) Int. Cl.: B62D 11/08, B60T 8/24

(54) **Method of operating a vehicle**
Verfahren zum Betreiben eines Fahrzeugs
Procédé de commande de véhicule

(30) Priority: 17.04.2007 GB 0707344
(43) Date of publication of application: 22.10.2008
(73) Proprietor: JCB Landpower Limited, Rocester Uttoxeter Staffordshire ST14 5JP (GB)
(72) Inventor: Sayers, Ian, Ashbourne DE6 2HD (GB); Nicklin, Charles, Sanbach CW11 1RJ (GB)
(74) Representative: Foot, Paul Matthew James

(56) References cited:
- DE-A1- 4 224 887
- DE-C1- 3 625 025
- US-A- 5 531 512
- US-A1- 2002 060 103

## Description

This invention relates to a method of operating a tractor and more particularly but not exclusively to a method of operating a tractor which in addition to being designed to be driven on a road, is designed to perform off-road working operations. Thus the tractor may be a tractor, and/or a working machine of the kind including one or more working arms which are manipulatable by powered e.g. hydraulic, actuators, for performing excavating and/or loading operations.

Tractors, particularly but not exclusively those which have relatively large rear wheels compared to relatively smaller front wheels, can be difficult to steer particularly in off-road conditions, mainly due to the rear biased weight distribution, and rear mounted work implements.

Conventional tractors i.e. tractors which are only capable of relatively low road speeds, e.g. below 50 kph, may be provided with a pair of brake pedals each of which is effective when operated to apply a brake to a single rear wheel. The brake pedals are coupleable by means of a coupling, so that when the tractor is driven on a road, an operator can only apply the brakes to the two rear wheels simultaneously and together, but for off-road conditions, with the coupling removed or otherwise inoperative, the rear wheels can individually be braked whilst steering is effected, so that a kind of skid-steer is performed, thereby enhancing the steering of the tractor.

However, known couplings for coupling the pair of brake pedals, which need manually to be applied, sometimes are not applied by operators when these are required, leading to the tractor being road driven with a pair of brake pedals needing to be operated to achieve safe braking.

For higher speed tractors which are able to travel on-road at higher speeds, for example only, up to 80 kph, it is a legal requirement in at least some countries for there to be a dual circuit braking system operated by a single brake pedal only. Accordingly hithertofore tractors capable of higher speeds on-road, have not been provided with any skid-steer ability for enhanced steering.

According to a first aspect of the invention we provide a method of operating a tractor according to claim 1.

According to a second aspect of the invention we provide a tractor according to claim 3.

A vehicle with off-road capabilities with the features of the preamble of each of the present independent claims 1 and 3 is known from US2002/0060103 A1, which is further improved.

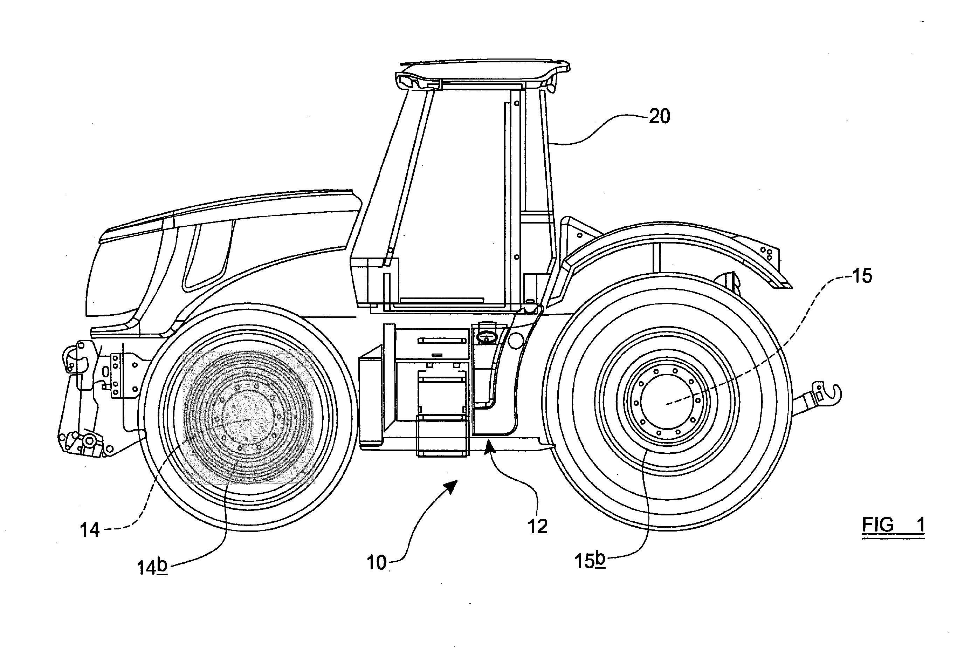

Embodiments of the invention will now be described with reference to the accompanying drawings in which:-
FIGURE 1 is a side view of a vehicle for which the method of the present invention may be performed;
FIGURE 2 is an illustrative diagram of part of the vehicle of figure 1.

Referring to the drawings there is shown a tractor 10 which includes a frame structure 12 which in this example includes a chassis and body. The frame structure 12 carries a ground engaging structure which in this example includes a front axle 14 carrying a pair of steerable front wheels 14a, 14b and in this example a rear axle 15 carrying a pair of non-steerable rear wheels 15a, 15b.

In the example, the rear wheels 15a, 15b only are driveable via a mechanical transmission 17 by an engine 18, which in the present example is an internal combustion engine although in another example all four wheels 14a, 14b, 15a, 15b or indeed only the front wheels 14a, 14b may be drivable, depending on the kind of tractor to which the invention is applied. The wheels 15a, 15b are drivable via a differential (16).

The tractor 10 further includes an operator's cab 20 from where the tractor 10 may be driven, there being within the cab 20 a steering control i.e. steering wheel 22 in this example, an accelerator or throttle pedal 23 and a brake pedal 24.

The speed of the tractor 10 may be changed by the operator pressing the accelerator pedal 23 and/or by changing the transmission ratio between the engine 18 and the driven wheels 15a, 15b, there being a first sensor 25 either on the transmission 17 as indicated, or on the engine 18, axle 14, 15 or a wheel 14a, 14b, 15a, 15b or elsewhere as desired, to provide a first input 26 to a tractor controller 30, indicative of the tractor 10 travelling speed over the ground.

Steering of the front wheels 14a, 14b of the tractor 10 may be effected by the operator actuating the steering wheel 22, which in the present example, imparts a steering movement to a an e.g. hydraulic, or other servo assisted mechanical or other steering transmission which in the present example includes a steering box 32 and rack and pinion steering mechanism. In this example the front wheels 14a, 14b are coupled by a steering rod 35 which is pivotally connected at each end to a swivel connection 36a, 36b of a front wheels 14a, 14b to be steered, the wheels 14a, 14b each being mounted on a respective swivel 38a, 38b for swivelling movement about respective generally upright axes 40a, 40b relative to the front axle 14.

Either provided on the steering rod 35 or anywhere else on the steering transmission or even on the steering wheel 22 or elsewhere, there is provided a second sensor 42 which senses that the tractor 10 is being steered, and provides a second input 43 to the controller 30, which in this example, is indicative of the degree of steering of the wheels 14a, 14b, i.e. the steering angle.

Upon an operator actuating the brake pedal 24, braking of all of the wheels 14a, 14b, 15a, 15b is achieved. Each wheel 14a, 14b, 15a, 15b has an associated brake device 45a, 45b, 45c, 45d which in this example is hydraulically activated to apply a braking force to brake the associated wheel. In the example, the brake devices 45a, 45b, 45c, 45d are all hydraulically operated by pressurised hydraulic fluid from a common master cylinder 48 but the invention may be applied to tractors having alternative braking systems as required, for example hydro-pneumatic braking systems. Preferably though, and not as shown in the drawings, dual brake circuits are provided so that on normal braking, one opposite pair of front and rear brake devices 45a and 45c are operated via one brake circuit, and the other opposite front and rear pair 45b, 45d of brake devices are operated via a second brake circuit.

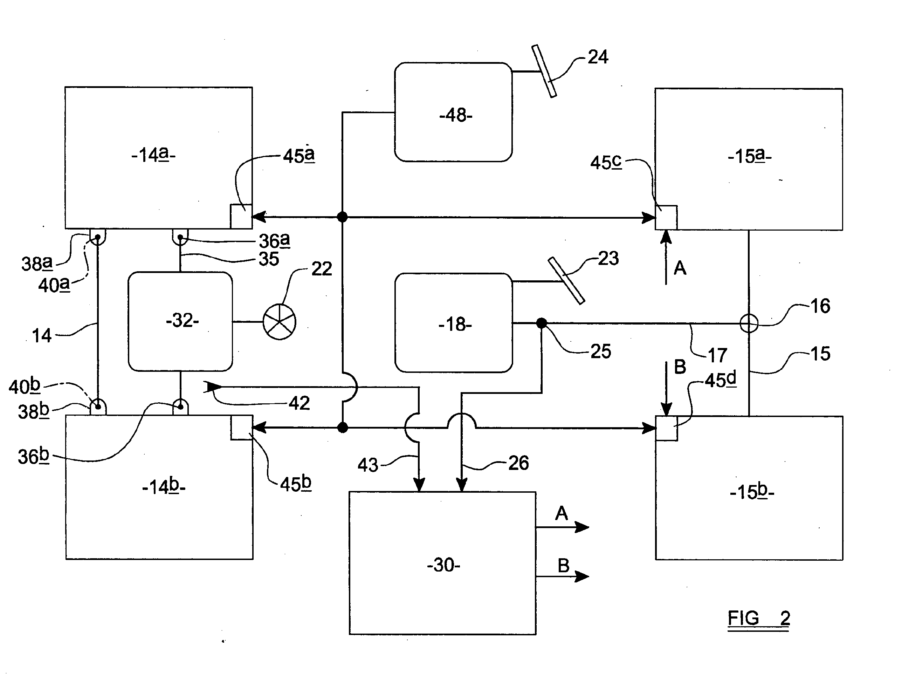

As well as being operated upon by an operator applying the brakes by depressing the foot pedal 24, each of the brake devices 45c, 45d of the rear wheels 15a, 15b is capable of operation independently in response to a respective signal A, B from the controller 30. This may be achieved in many different ways and figure 2 merely illustrates diagrammatically that this is possible. For example where the brake devices 45c, 45d are hydro-pneumatic, the signals A, B from the controller 30 may open a respective hydraulic valve to cause a respective brake device 45c, 45d to be applied independently of any pneumatic braking pressure. The controller 30 could alternatively cause operation of a braking system which is independent of the braking system by which the tractor 10 is conventionally braked in another example,

The controller 30 is programmed e.g. with a suitable algorithm to respond to the inputs 26, 43 from the travel speed first sensor 25 and the steering angle second sensor 42 to apply one of the brake devices 45c, 45d to brake one of the rear wheels 15a, 15b to enhance steering of the tractor 10 at slow travelling speeds.

For example, if the tractor 10 is steered to swivel the front wheels 14a, 14b clockwise about their respective swivel axes 40a, 40b such that the tractor 10 would if moving forwards, move to the right, the rear right hand side rear wheel 15a on the same side of the tractor 10 as the direction in which the tractor 10 is being steered, would be braked, to enhance steering, the tractor 10 thus performing a kind of skid-steering action. Thus the turning circle achievable compared with just swivelling the front wheels 14a, 14b will be reduced.

It will be appreciated that the magnitude of the torque provided by the engine 18 via the transmission 17 remains the same as the driven wheel 15a is braked, and the differential between the driven wheels 15a, 15b transfers torque to wheel 15b. Desirably the input from the first sensor 25 is indicative of the actual travelling speed and the controller 30 determines whether the tractor speed is above or below a threshold speed, and only in the event that the tractor 10 travelling speed is below the threshold speed will the controller 30 act automatically to operate the respective brake device 45c, 45d. Moreover the controller 30 uses the input 26 from the travelling speed first sensor 25 and/or the steering angle second sensor 42 to control the amount of application of the brake e.g. so that at very slow tractor speeds, the respective wheel 15a, 15b may be locked or virtually so, whereas as greater speeds, but still below the threshold speed, only partial braking may be applied, and so that the braking effect may be increased for greater steering angles.

The input 43 from the second, steering sensor 42 may indicate not only whether the tractor 10 is being steered, but may include third input information relating to the degree of such steering in that direction. The controller 30 may respond by operating the respective brake device 45c, 45d to apply more braking force to a relevant wheel 15a, 15b as the steering angle increases.

Desirably, the controller 30 only operates the respective brake device 45c, 45d when the steering angle is greater than a minimum steering angle, so that braking is not effected where an operator is e.g. making small adjustments, e.g. to keep the tractor in a straight ahead travelling direction.

The algorithm with which the controller 30 is programmed may include other logic and require other inputs. For example, the controller 30 may include an input (not shown) from the brake pedal 24 or otherwise from the braking system, to indicate when the brake devices (45a, 45b, 45c, 45d) are being applied by the operator, in which case the controller 30 may cease to operate one only of the rear brake devices 45c, 45d, such that each of the brake devices 45a, 45b, 45c, 45d is operable in response to the input from the brake pedal 24, or otherwise.

Desirably the controller 30 includes a switch by means of which the responsiveness to the inputs 26, 43 may be disabled, for example when the tractor 10 is being driven on-road even at low speeds below the threshold speed, which switch may be operator controlled, or automatically actuated. The actions of the controller 30 to apply the one brake device 45c, 45d may be disabled by an input from a sensor sensing a front or rear towing linkage position, or that a differential lock has been engaged.

Various modifications may be made without departing from the scope of the present invention as defined in the appended claims.

The tractor 10 may be of the kind in which all four wheels 14a, 14b, 15a, 15b are steerable, so that that the tractor 10 may be operated in two wheel steering mode substantially as described above in relation to the illustrated embodiments, or four wheel steering mode. Such vehicles typically have two alternative four wheel steering modes namely "cramp" mode in which the front wheels 14a, 14b are swivelled in the opposite directions to the directions in which the rear wheels 15a, 15b are swivelled, and "crab" mode in which all four wheels 14a, 4b, 15a, 1 5b are swivelled in the same direction.

The present invention in which braking of a rear wheel 15a, 15b in the direction of travel is effected in response to travelling speed and input 26 from the steering sensor 25 is preferably only utilised with such a tractor operating in two wheel steering mode as outlined above.

Although it is preferred that the amount of braking of the one brake device 45c, 45d depends upon the steering angle sensed by the second sensor 42, in another example, the amount of braking may be dependent only on the speed of the tractor 10.

Although the invention has been described above with reference to one or more preferred embodiments, it will be appreciated that various changes or modifications may be made without departing from the scope of the invention as defined in the appended claims.

## Claims

1. A method of operating a tractor (10) for performing off-road working operations, the tractor having a frame structure (12) carrying a ground engaging structure whereby the tractor (10) may travel over the ground, the ground engaging structure including a pair of steerable wheels (14a, 14b), which, with the tractor (10) travelling in a travelling direction, are front wheels, where each may be braked by a respective brake device (45a, 45b) and a pair of rear wheels (15a, 15b) which may each independently be braked by the operation of respective brake devices (45c, 45d), the tractor (10) further including a controller (30) which is capable of providing signals independently to the brake devices (45c, 45d) of the rear wheels (15a, 15b) to effect application and release of a selected brake, and the method including sensing the tractor travelling speed and providing a first input of the controller (30), sensing steering of the tractor (10) by the operator and providing a second input to the controller (30), and where the travelling speed is below a threshold speed and depending on the direction of steering of the tractor (10), the controller (30) applying one of the brakes, wherein the method includes applying the brake device (45c, 45d) of the rear wheel (15a, 15b) only on the side of the tractor (10) to which the tractor (10) is being steered, to a degree depending upon the magnitude of the angle through which the tractor is being steered and/or the tractor speed, the rear wheels (15a, 15b) being driven whilst one only of the brake devices (45c, 45d) of the rear wheels (15a, 15b) is operated and **characterised in that** the method further includes disabling the operation of applying one of the brake devices (45c, 45d) of the rear wheels (15a, 15b) in response to an input from a sensor sensing a front or rear towing linkage position.

2. A method according to claim 1 **characterised in that** the tractor (10) includes a single operator brake pedal (24) which when operated applies the brakes on both rear wheels (15a, 15b) of the tractor via separate brake circuits.

3. A tractor (10) for performing off-road working operations, the tractor having a frame structure (12) carrying a ground engaging structure whereby the tractor (10) may travel over the ground, the ground engaging structure including a pair of steerable wheels (14a, 14b) which with the tractor (10) travelling in a travelling direction, are front wheels, and a pair of rear wheels (15a, 15b) which each are independently brakable by the operation of respective brake devices (45c,45d), the tractor (10) further including a controller (30) which is capable of providing signals independently to the brake devices (45c, 45d) of the rear wheels (15a, 15b) to effect application and release of a selected brake, a first sensor device (25) for sensing the tractor travelling speed and providing a first input (26) to the controller, a second sensor device (42) for sensing steering of the tractor (10) by the operator and providing a second input (43) to the controller (30), the controller (30) being programmed to respond to the first and second inputs (26, 43) to apply one only of the brake devices (45c, 45d) of the rear wheel (15a, 15b) on the side of the tractor to which the tractor is being steered, depending upon whether the travelling speed is below a threshold speed and depending on the direction of steering of the tractor (10) wherein the degree to which the brake device is applied depends upon the magnitude of the angle through which the tractor (10) is being steered and/or the tractor speed, the rear wheels being driven whilst one only of the brake devices of the rear wheels is operated and **characterised in that** the controller (30) is further programmed to disable the operation of applying one of the brake devices (45c, 45d) of the rear wheels in response to an input from a sensor sensing a front or rear towing linkage position.

## Patentansprüche

1. Verfahren zum Bedienen eines Traktors (10) zur Verrichtung von Off-Road-Arbeitsgängen, wobei der Traktor einen Rahmen (12) aufweist, der eine mit dem Boden in Eingriff kommende Baueinheit trägt, wobei sich der Traktor (10) über den Boden bewegen kann, wobei die mit dem Boden in Eingriff kommende Baueinheit ein Paar von steuerbaren Rädern (14a, 14b) umfasst, die, soweit der Traktor (10) sich in einer Bewegungsrichtung bewegt, Vorderräder sind, wobei jedes von einer zugehörigen Bremseinrichtung (45a, 45b) gebremst werden kann, und ein Paar von Hinterrädern (15a, 15b), die jeweils durch Betätigen von zugehörigen Bremseinrichtungen (45c, 45d) unabhängig gebremst werden können, wobei der Traktor (10) weiterhin eine Steuereinrichtung (30) umfasst, die unabhängig Signale an die Bremseinrichtungen (45c, 45d) der Hinterräder (15a, 15b) geben kann, um das Anziehen und Lösen einer ausgewählten Bremse zu ermöglichen, und wobei das Verfahren das Erfassen der Bewegungsgeschwindigkeit des Traktors umfasst und das Ausgeben eines ersten Eingangssignals der Steuereinrichtung (30), das Erfassen der Steuerung des Traktors (10) durch die ihn bedienende Person und das Ausgeben eines zweiten Eingangssignals an die Steuereinrichtung (30), und wobei dort wo die Bewegungsgeschwindigkeit unterhalb einer Grenzgeschwindigkeit ist und von der Steuerungsrichtung des Traktors (10) abhängt, die Steuereinrichtung (30) eine der Bremsen anzieht, wobei das Verfahren das Anziehen der Bremseinrichtung (45c, 45d) des Hinterrads (15a, 15b) allein auf der Seite des Traktors (10) umfasst, auf die der Traktor (10) gesteuert wird, und zwar in einem Maße, der von der Größe des Winkels abhängt, durch den der Traktor gesteuert wird, und/oder der Traktorgeschwindigkeit, wobei die Hinterräder (15a, 15b) angetrieben werden, während nur eine der Bremseinrichtungen (45c, 45d) der Hinterräder (15a, 15b) bedient wird, und **dadurch gekennzeichnet, dass** das Verfahren weiterhin das Anwenden einer der Bremseinrichtungen (45c, 45d) der Hinterräder (15a, 15b) in Abhängigkeit von einem Eingangssignal von einem Sensor unterbindet, der eine vorderseitige oder eine rückseitige Schlepp-Verbindungsposition erfasst.

2. Verfahren nach Anspruch 1, **dadurch gekennzeichnet, dass** der Traktor (10) ein einziges Bediener-Bremspedal (24) umfasst, das, wenn es betätigt wird, die Bremsen an beiden Hinterräder (15a, 15b) des Traktors über getrennte Bremskreise anzieht.

3. Traktor (10) zur Verrichtung von Off-Road-Arbeitsgängen, wobei der Traktor einen Rahmen (12) aufweist, der eine mit dem Boden in Eingriff kommende Baueinheit trägt, wobei sich der Traktor (10) über den Boden bewegen kann, wobei die mit dem Boden in Eingriff kommende Baueinheit ein Paar von steuerbaren Rädern (14a, 14b) umfasst, die, soweit der Traktor (10) sich in einer Bewegungsrichtung bewegt, Vorderräder sind, und ein Paar von Hinterrädern (15a, 15b), die jeweils durch Betätigen von zugehörigen Bremseinrichtungen (45c, 45d) unabhängig gebremst werden können, wobei der Traktor (10) weiterhin eine Steuereinrichtung (30) umfasst, die unabhängig Signale an die Bremseinrichtungen (45c, 45d) der Hinterräder (15a, 15b) geben kann, um das Anziehen und Lösen einer ausgewählten Bremse zu ermöglichen, einen ersten Sensor (25) zum Erfassen der Bewegungsgeschwindigkeit des Traktors und zum Ausgeben eines ersten Eingangssignals (26) an die Steuereinrichtung, einen zweiten Sensor (42) zum Erfassen der Steuerung des Traktors (10) durch die ihn bedienende Person und das Ausgeben eines zweiten Eingangssignals (43) an die Steuereinrichtung (30), wobei die Steuereinrichtung (30) so programmiert ist, dass sie auf das erste und das zweite Eingangssignal (26, 43) reagiert, um lediglich eine der Bremseinrichtungen (45c, 45d) des Hinterrades (15a, 15b) auf der Seite des Traktors anzuziehen, auf die der Traktor (10) gesteuert wird, und zwar in Abhängigkeit davon, ob die Bewegungsgeschwindigkeit unterhalb einer Grenzgeschwindigkeit ist, und von der Steuerungsrichtung des Traktors (10) abhängt, und wobei der Grad, bis zu dem die Bremseinrichtung angezogen wird, von der Größe des Winkels abhängt, durch den der Traktor (10) gesteuert wird, und/oder der Traktorgeschwindigkeit, wobei die Hinterräder angetrieben werden, während nur eine der Bremseinrichtungen der Hinterräder bedient wird, und **dadurch gekennzeichnet, dass** die Steuereinrichtung (30) weiterhin so programmiert ist, dass sie das Anwenden einer der Bremseinrichtungen (45c, 45d) der Hinterräder in Abhängigkeit von einem Eingangssignal von einem Sensor unterbindet, der eine vorderseitige oder eine rückseitige Schlepp-Verbindungsposition erfasst.

## Revendications

1. Procédé de conduite d'un tracteur (10) destiné à effectuer des opérations de travail non-routières, le tracteur ayant une structure de cadre (12) portant une structure en prise avec le sol, par l'intermédiaire de laquelle le tracteur (10) peut se déplacer sur le sol, la structure en prise avec le sol comprenant une paire de roues directrices (14a, 14b) qui sont des roues avant, lorsque le tracteur (10) se déplace dans un sens de déplacement, dont chacune peut être freinée par un dispositif de freinage respectif (45a, 45b), et une paire de roues arrières (15a, 15b), dont chacune peut être freinée indépendamment l'une de l'autre en activant les dispositifs de freinage respectifs (45c, 45d), le tracteur (10) comprenant, en outre, un contrôleur (30), qui peut envoyer des signaux indépendamment à l'un ou l'autre des dispositifs de freinage (45c, 45d) des roues arrières (15a, 15b) pour effectuer le serrage et le desserrage d'un frein sélectionné, et le procédé comprenant le captage de la vitesse de déplacement du tracteur et l'envoi d'une première entrée au contrôleur (30), le captage du braquage du tracteur (10) par l'opérateur et l'envoi d'une seconde entrée au contrôleur (30), et, dans le cas où la vitesse de déplacement est inférieure à une vitesse seuil, le contrôleur serre un des freins en fonction du sens de braquage du tracteur (10), le procédé comprenant l'activation du dispositif de freinage (45c, 45d) de la roue arrière (15a, 15b) seulement sur le côté du tracteur (10), vers lequel celui-ci est braqué, à un degré dépendant de la grandeur de l'angle de braquage du tracteur et/ou de la vitesse du tracteur, les roues arrières (15a, 15b) étant entraînées pendant qu'un seul des dispositifs de freinage (45c, 45d) des roues arrières (15a, 15b) est activé et étant **caractérisé en ce que** le procédé comprend, en outre, l'empêchement de l'opération d'activation d'un des dispositifs de freinage (45c, 45d) des roues arrières (15a, 15b) en réponse à une entrée depuis un capteur captant une position d'attelage avant ou arrière.

2. Procédé suivant la revendication 1, **caractérisé en ce que** le tracteur (10) comprend une seule pédale de frein d'opérateur (24) qui serre les freins contre les deux roues arrières (15a, 15b) du tracteur via des circuits de freinage séparés, lorsqu'elle est activée.

3. Tracteur (10) destiné à effectuer des opérations de travail non-routières, le tracteur ayant une structure de cadre (12) portant une structure en prise avec le sol, par l'intermédiaire de laquelle le tracteur (10) peut se déplacer sur le sol, la structure en prise avec le sol comprenant une paire de roues directrices (14a, 14b) qui sont des roues avant, lorsque le tracteur (10) se déplace dans un sens de déplacement et une paire de roues arrières (15a, 15b), dont chacune peut être freinée indépendamment l'une de l'autre en activant les dispositifs de freinage respectifs (45a, 45b), le tracteur (10) comprenant, en outre, un contrôleur (30), qui peut envoyer des signaux indépendant à l'un ou l'autre des dispositifs de freinage (45c, 45d) des roues arrières (15a, 15b) pour effectuer le serrage ou le desserrage d'un frein sélectionné, un premier dispositif capteur (25) pour capter la vitesse de déplacement du tracteur et envoyer une première entrée (26) au contrôleur, un second dispositif capteur (42) pour capter le braquage du tracteur (10) par l'opérateur et envoyer une seconde entrée (43) au contrôleur (30), le contrôleur (30) étant programmé pour répondre aux première et seconde entrées (26, 43) par l'activation d'un seul des dispositifs de freinage (45c, 45d) de la roue arrière sur le côté du tracteur, vers lequel celui-ci est braqué, dans le cas où la vitesse de déplacement est inférieure à une vitesse seuil et en fonction du sens de braquage du tracteur (10), le degré d'activation du dispositif de freinage dépendant de la grandeur de l'angle de braquage du tracteur (10) et/ou de la vitesse de celui-ci, les roues arrières étant entraînées pendant qu'un seul des dispositifs de freinage des roues arrières est activé et **caractérisé en ce que** le contrôleur (30) est, en outre, programmé pour empêcher l'activation d'un des dispositifs de freinage (45c, 45d) des roues arrière en réponse à une entrée depuis un capteur captant une position d'attelage avant ou arrière.
